(19) Europäisches Patentamt
European Patent Office
Office européen des brevets

(11) **EP 1 919 238 A1**

(12) **EUROPEAN PATENT APPLICATION**
published in accordance with Art. 153(4) EPC

(43) Date of publication:
**07.05.2008 Bulletin 2008/19**

(51) Int Cl.:
*H04Q 7/38* *(2006.01)*          *H04Q 7/36* *(2006.01)*

(21) Application number: **06783049.7**

(22) Date of filing: **25.08.2006**

(86) International application number:
**PCT/JP2006/316760**

(87) International publication number:
**WO 2007/023957 (01.03.2007 Gazette 2007/09)**

(84) Designated Contracting States:
**DE FR GB**

(30) Priority: **26.08.2005 JP 2005246089**

(71) Applicant: **MATSUSHITA ELECTRIC INDUSTRIAL CO., LTD.**
**Osaka 571-8501 (JP)**

(72) Inventor: **AOYAMA, Takahisa**
**Matsushita Electric Industrial Co.,Ltd.**
**2-1-61, Shiromi, Chuo-ku**
**Osaka 540-6207 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **WIRELESS COMMUNICATION TERMINAL APPARATUS, NETWORK APPARATUS, WIRELESS COMMUNICATION SYSTEM AND TELEPHONE CALL CONNECTING METHOD**

(57)     A wireless communication terminal apparatus, a network apparatus, a wireless communication system and a telephone call connecting method wherein the increasing of the number of indexes is suppressed and a preconfiguration is applied to a multi-call. A multi-call additional information deciding part (105) determines whether a plurality of indexes are used to set a preconfiguration. When determining that the plurality of indexes are used to set a preconfiguration, the multi-call additional information deciding part (105) sets SRB and TFCS. A control information producing part (106) produces control information including the preconfiguration type, the indexes and the information of the SRB and TFCS settings decided by the multi-call additional information deciding part (105). The produced control information is transmitted from a control information transmitting part (107) to a UE.

NODE B 100

FIG.6

EP 1 919 238 A1

**Description**

Technical Field

The present invention relates to a radio communication terminal apparatus, network apparatus, radio communication system, and call connection method where a preconfiguration is applied to multi-call.

Background Art

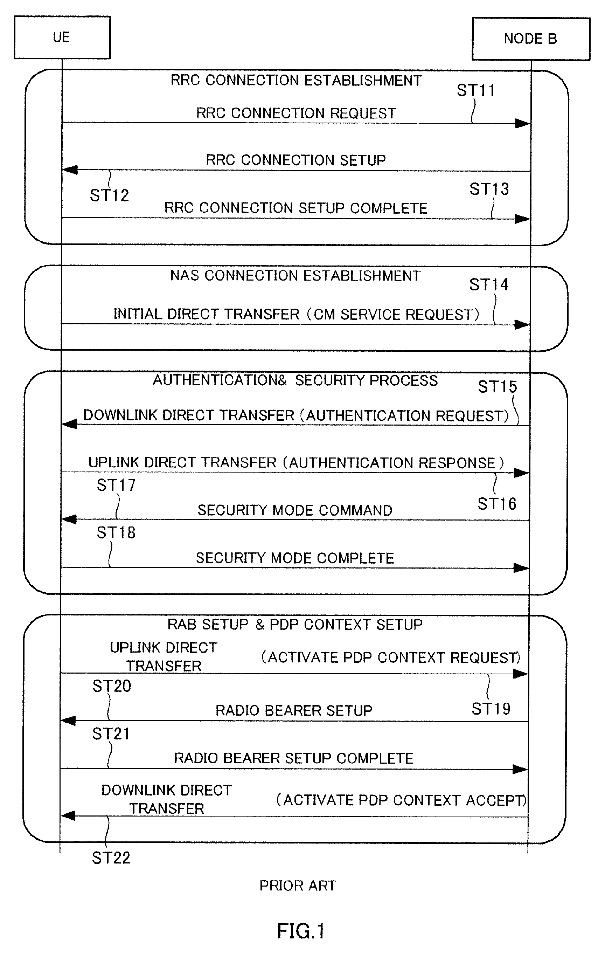

Generally, RAN (Radio Access Network) is configured with an RNC (Radio Network Controller) and Node B. The RNC is connected to CN (Core Network) which is exchange network through an Iu interface, and Node B is connected to a UE (User Equipment) through a radio interface.
A protocol of the radio interface is configured with layer 1 (physical layer), layer 2 (data link layer) and layer 3 (network layer). A logical channel is defined between layer 3 and layer 2, and a transport channel is defined between layer 2 and layer 1.
Layer 2 is divided into two sub-layers; RLC (Radio Link Control) which controls a radio link and MAC (Medium Access Control) which controls assignment of radio resources or the like.
Furthermore, layer 3 is divided into C-Plane which controls call settings or the like and U-Plane which transmits user information. The C-Plane is further divided into RRC (Radio Resource Control) which directly controls layer 1 and layer 2 and NAS (Non Accesses Stratum) which performs higher-layer control. Here, MM (Mobility Management) is a function that plays a central role in the NAS.
RRC provides several services, for example, reporting of broadcast information to all UEs in an area, calling of a specific UE, and setting, change or release of connections, and plays an important role in call connection between a UE and the network.
Here, general steps for call connection between a UE and Node B will be explained using FIG. 1. In FIG. 1, in ST11, the UE transmits an RRC connection request message to Node B. In ST12, Node B transmits an RRC connection setup message to the UE in response to the RRC connection request message and reports UE identity and channel setting for control information.
In ST13, the UE performs a channel setting on the UE side according to the content reported with the RRC connection setup message and transmits an RRC connection setup complete message to Node B as a setting completion report.
RRC connection establishment is completed by processing in ST11 to ST13. In this RRC connection establishment, the generally established channels include RB1 (applying an RLC UM which means Unacknowledged Mode), RB2 (applying an RLC AM which means Acknowledged Mode for transmission of an RRC message not including a NAS message), andRB3 (applying an RLC AM for transmission of an RRC message including a NAS message) of an SRB (Signaling Radio Bearer) which is a radio bearer for transmitting control information. The content to be set for the respective channels includes the priority of the channel, a PDU length of a message to be transmitted, a transport channel type to be used and other transport channel information in addition to the above-described mode of RLC.
Next, in ST14, the UE creates a CM service request, which is a NAS message for requesting start of a service, and transmits to Node B, an initial direct transfer message, which is an RRC message, including the created CM service request. Node B starts management of the UE in MM using the initial direct transfer message as a trigger. NAS connection establishment is completed by the processing in ST14.
In ST15, Node B transmits to the UE, a downlink direct transfer message including an authentication request. Furthermore, in ST16, the UE transmits to Node B, an uplink direct transfer message including an authentication response. By this means, the UE and Node B perform authentication.
In ST17, Node B transmits a security mode command message to the UE and reports the settings of confidentiality/encryption including information of random numbers used for security. In ST18, the UE transmits a security mode complete message together with an uplink control timing to Node B in response to the security mode command message. The authentication and security process are completed by processing in ST15 to ST18.
In ST19, the UE includes a NAS message in the RRC message and transmits a request for establishing PDP context (packet session) to Node B. In ST20, Node B transmits a radio bearer setup message to the UE and sets an RAB (Radio Access Bearer) which is a channel for traffic data communication.
In ST21, the UE transmits a radio bearer setup complete message to Node B reporting that the RAB has been successfully set. In ST22, Node B transmits to the UE, a downlink direct transfer message including a PDP context establishment response, and thereby reports that the establishment of PDP context has been eventually completed. RAB setup and PDP context setup are completed by these processing in ST19 to ST22.
In this way, a call is established by the processing in ST11 to ST22. In this case, each message includes many information that should be transmitted as setting information (hereinafter "IE" which means Information Element). Messages particularly having a great amount of information include an RRC connection setup (establishment of a channel for control information) message which establishes a radio channel and a radio bearer setup (establishment of a channel for traffic data) message, which is a factor of delay in call connection.

Thus, as a method for reducing a call connection delay, the 3GPP (3rd Generation Partnership Project) standardizes a method called a "preconfiguration" (generic term for default configuration, predefined configuration and stored configuration) which reduces the size of a message related to call connection. A preconfiguration will be explained below.

The preconfiguration is defined based on a basic concept in which radio channel establishment information is not transmitted at all times, a UE is made to hold representative information and only an index is reported to the UE from the network.

First, a default configuration will be explained. In the default configuration, a configuration pattern is set by adding an index (14 types) to a configuration pattern defined in advance (see Section 2 of Non-Patent Document 1 for details), making the UE hold this index and reporting the index from the network.

Thus, the index is the only information (a message such as an RRC connection setup message and radio bearer setup message) that is transmitted from the network, and so the message size can be reduced significantly, so that it is possible to reduce a call connection delay. On the other hand, only defined configuration patterns can be used, and so it is not possible to perform setting unique to the operator or a setting according to UEs.

Next, a predefined configuration will be explained. In the predefined configuration, a configuration pattern and a corresponding index (16 types) are transmitted using a channel broadcasted from the network. A UE receives broadcast information transmitted from the network in an idle state or the like and holds the configuration pattern and index.

The UE reports as to whether or not the UE holds a relationship between the configuration and the index to the network when an RRC connection request message is transmitted. When it is decided that the UE holds the broadcast information, the network can transmit only the index in the same way as the default configuration, reduce a message size, so that it is possible to reduce a call connection delay.

Unlike the default configuration, the predefined configuration allows setting unique to the operator. However, radio resources are used wastefully when the UE not using the configuration transmitted with broadcast information is taken into consideration.

Next, a stored configuration will be explained. When the network performs configuration such as RRC connection setup and radio bearer setup on the UE, the stored configuration transmits not only a configuration pattern but also an index specifying the configuration pattern thereof simultaneously.

The UE manages and holds the configuration transmitted from the network using the index transmitted simultaneously with this configuration. When the network transmits a message such as the next RRC connection setup message and radio bearer setup message, by transmitting the index to the UE, the network needs not to transmit a large amount of configuration again. Furthermore, the network allows individual users to hold a necessary configuration. On the other hand, the stored configuration requires all setting information to be transmitted using a dedicated channel, and so the channel capacity of the dedicated channel is suppressed.

By the way, there is a service called "multi-call" which establishes a plurality of calls simultaneously. For example, the multi-call service performs web browsing while performing a speech call, or sends/receives e-mails while performing a speech call.

The multi-call setting steps can be roughly divided into two types. One is a step of setting a plurality of calls simultaneously, and the other is a step of setting one call first and setting another call sequentially.

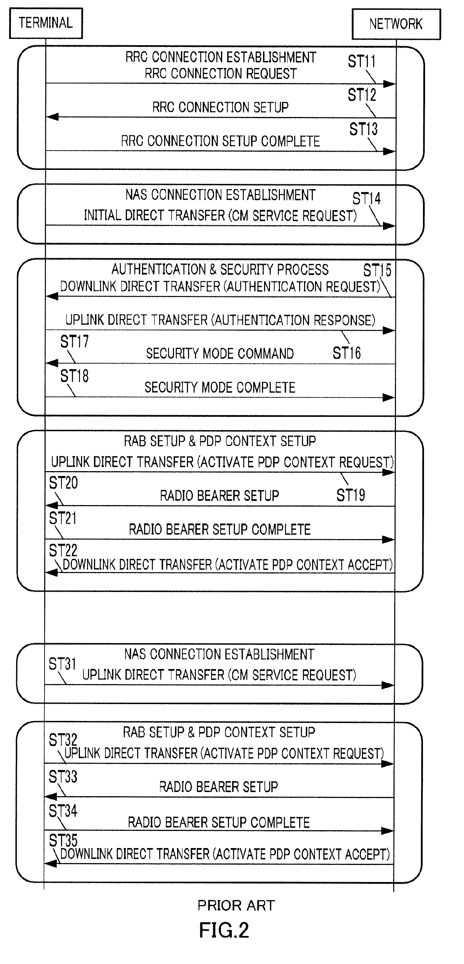

In the former, a plurality of calls are set using a radio bearer setup message. On the other hand, in the latter, as shown in FIG.2, a packet call is set as a first call in ST19 to ST22, and sequentially, in ST31, connection establishment (service request for VoIP which means Voice over IP) of NAS is performed again, and, in ST32 to ST35, RAB setup and PDP context setup are performed on a second call (speech call) to be newly established. The steps in ST32 to ST35 are the same as the steps in ST19 to ST22 for setting the first call, and so detailed explanations thereof will be omitted.

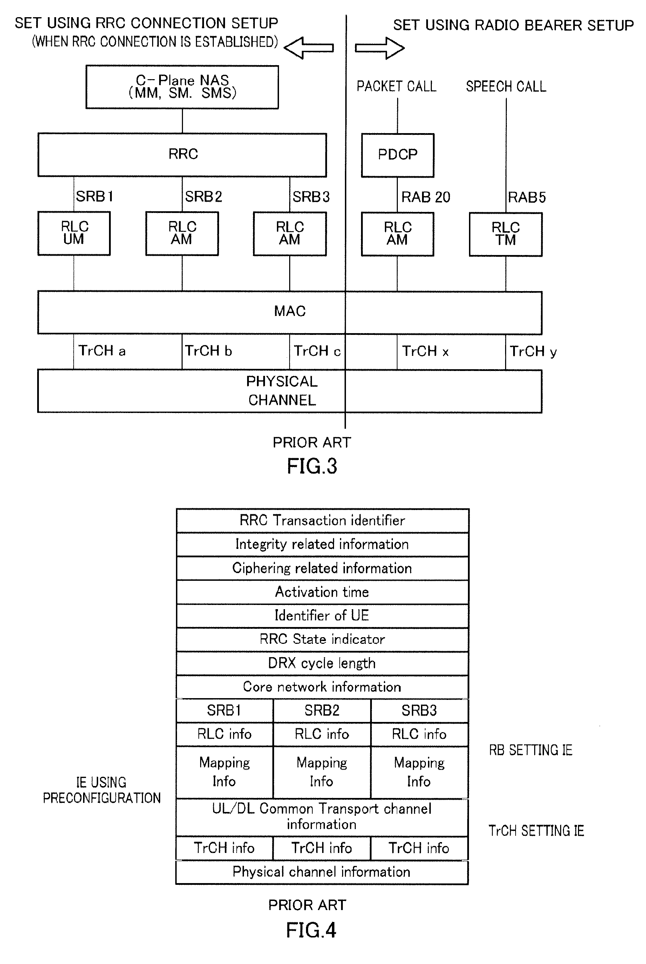

Here, FIG.3 shows a multi-call channel structure. As shown in FIG.3, three SRBs are provided for control signals, and transport channels are assigned to the SRBs. Furthermore, a multi-call system including a packet call and a speech call is assumed here, and so RAB20 and RAB5 are provided as traffic data (RAB numbers are illustrated as an example). Transport channels are also assigned to these RABs. Therefore, in the example of FIG.3, five transport channels are mapped to a physical channel.

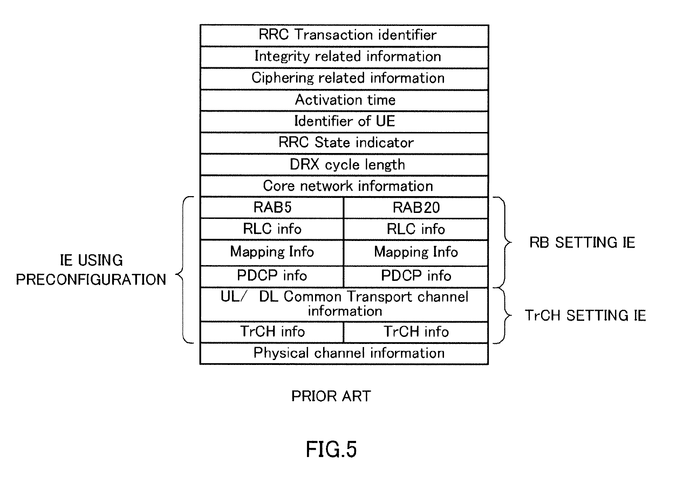

As an example of a message for making the setting shown in FIG.3 in the UE, FIG.4 shows an RRC connection setup message, and FIG. 5 shows a radio bearer setup message. As shown in FIG.4 and FIG.5, the preconfiguration is applied only to an RB setting IE and TrCH setting IE. The setting of PhyCH is not included in the message because the setting varies per cell, and so it is difficult to apply a preconfiguration.

When the preconfiguration is applied to such multi-call, for example, when a speech call of an AMR (Advanced Multi Rate Codec) and a packet call are established simultaneously, or when a speech call of VoIP and a packet call are established simultaneously, indexes need to be provided for configuration patterns corresponding to the combinations.

Non-Patent Documen1: 3GPP TR25.331, "Radio Resource Control (RRC) Protocol Specification"

Non-Patent Document 2: Signaling Enhancements for CS and PS Connection Analyses and Recommendations

Disclosure of Invention

Problems to be Solved by the Invention

However, there can be many multi-call configuration patterns,andsomanycorrespondingindexes also need to be provided. From the viewpoint of reduction of a message size, this is not desirable. Furthermore, the multi-call is currently defined to be applicable only to a CS (Circuit Switch) call, and the number of configuration patterns will increase taking into consideration the future application of multi-call also to PS (Packet Switch) call. Furthermore, in some of indexes defined in advance, the signaling channel rate is fixed, and it is necessary to increase the number of indexes to realize a high-speed signaling channel rate in the future.

It is therefore an object of the present invention to provide a radio communication terminal apparatus, network apparatus, radio communication system and call connection method for suppressing an increase of indexes and applying a preconfiguration to multi-call.

Means for Solving the Problem

The network apparatus of the present invention employs a configuration having: an additional information determining section that determines, when commands are given using a plurality of indexes specifying configuration information which is a combination pattern of channel setting information, additional information other than the configuration information; a control information creation section that creates control information including the plurality of indexes and determined additional information; and a transmitting section that transmits the created control information.

Advantageous Effect of the Invention

According to the present invention, it is possible to suppress an increase of indexes and apply a preconfiguration to multi-call.

Brief Description of Drawings

FIG.1 is a sequence diagram showing general steps for call connection between a UE and Node B;
FIG.2 is a sequence diagram showing multi-call setting steps;
FIG.3 shows a multi-call channel structure;
FIG.4 is a conceptual diagram showing the IE configuration of an RRC connection setup message;
FIG.5 is a conceptual diagram showing the IE configuration of a radio bearer setup message;
FIG.6 is a block diagram showing the configuration of Node B according to Embodiment 1 of the present invention;
FIG.7 is a conceptual diagram showing a message format of control information created by the control information creation section shown in FIG.6;
FIG.8 is a block diagram showing the configuration of a UE according to Embodiment 1 of the present invention;
FIG.9 is a block diagram showing the configuration of a UE according to Embodiment 2 of the present invention; and
FIG.10 is a conceptual diagram showing a message format of control information received by the UE shown in FIG.9.

Best Mode for Carrying Out the Invention

Embodiments of the present invention will be explained below in detail with reference to the accompanying drawings.

(Embodiment 1)

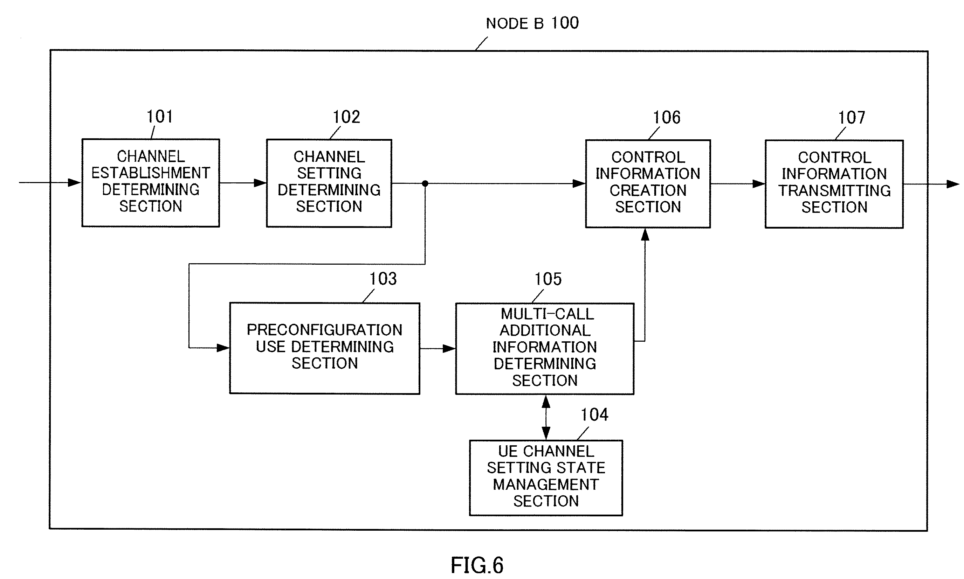

FIG.6 is a block diagram showing the configuration of Node B 100 according to Embodiment 1 of the present invention. In this figure, channel establishment determining section 101 receives a service request (for example, speech and streaming) reported from a higher layer (not shown) and determines to establish or delete a channel.

Specific examples of the service request reported from the higher layer include signaling connection establishment, mobile originating call establishment or packet mode connection establishment, emergency call establishment, short message service, supplementary service activation and voice group call establishment.

Specific examples of the type of the established channels (such as channel for speech, channel for streaming and channel for signaling) include SRB1, 2, 3 for signaling connection, TrCH and PhyCH corresponding to SRB1, 2, 3, RABs for speech, TrCH and PhyCH corresponding to the RABs for speech, RABs for packet, and TrCH and PhyCH corresponding to the RABs for packet. The types of channel determined to be established (such as speech communication and streaming communication) are reported to channel setting determining section 102.

Channel setting determining section 102 determines the detailed setting of each channel (setting necessary to establish a channel) based on the types of the channel reported from channel establishment determining section 101. More specifically, channel setting determining section 102 determines the setting for each channel shown in FIG.4 and FIG.5, for example, in the case of RB setting, RB/RAB identity, CN domain identity (CS or PS), reestablishment timer (in the case of CS, the set time is shorter than PS), PDCP-related information (setting related to header compression, which is not necessary if no header compression is carried out), mode of RLC (AM, UM, and TM which means Transparent Mode), various settings of RLC (such as a window size of RLC and a timer for ACK transmission), and information specifying to which TrCH, RB is mapped.

Furthermore, in the case of TrCH setting, channel setting determining section 102 determines, for example, TrCH identity, type of TrCH (such as DCH, HS-DSCH and E-DCH), PDU size, TTI, coding rate, rate matching attribute, CRC size, TFCS (Transport Format Combination Set) and buffer size of TrCH.

Furthermore, in the case of PhyCH setting, channel setting determining section 102 determines, for example, frequency information (information of a frequency band), maximum uplink transmission power, scrambling code type, scrambling code number, spreading factor and radio timing information.

The setting information determined in this way (hereinafter "channel setting information") is outputted to preconfiguration use determining section 103 and control information creation section 106.

Preconfiguration use determining section 103 stores preconfiguration information, and, by deciding whether or not channel setting information outputted from channel setting determining section 102 is included in the stored pre-configuration information, decides whether or not the corresponding UE can use the preconfiguration. That is, preconfiguration use determining section 103 decides that the UE can use the preconfiguration if the channel setting information matches the preconfiguration information.

Upon deciding to use the preconfiguration, preconfiguration use determining section 103 outputs to multi-call additional information determining section 105 information as to whether the type of preconfiguration to be used is default configuration, predefined configuration or stored configuration, and the index corresponding to the configuration pattern that has matched the channel setting information.

Upon deciding not to use the preconfiguration, preconfiguration use determining section 103 outputs the channel setting information itself to multi-call additional information determining section 105. Preconfiguration use determining section 103 may also decide that the preconfiguration can be used if communication is possible using the setting of preconfiguration while the channel setting information does not completely match the stored preconfiguration information.

UE channel setting state management section 104 acquires from multi-call additional information determining section 105 a channel type and channel setting information to be set in the UE when the preconfiguration is not used, acquires the preconfiguration type and index when the preconfiguration is used, and manages these acquired information. Furthermore, UE channel setting state management section 104 reports the current UE channel setting information to multi-call additional information determining section 105.

When the channel setting information itself is outputted from preconfiguration use determining section 103, multi-call additional information determining section 105 reports to control information creation section 106 that the preconfiguration is not used.

Furthermore, when preconfiguration use determining section 103 outputs to multi-call additional information determining section 105 the preconfiguration type and index to be used, multi-call additional information determining section 105 decides whether or not to set the preconfiguration using a plurality of indexes. Upon deciding to set the preconfiguration without using a plurality of indexes, multi-call additional information determining section 105 transfers to control information creation section 106 the preconfiguration type and index outputted from preconfiguration use determining section 103.

On the other hand, upon deciding to set the preconfiguration using a plurality of indexes, multi-call additional information determining section 105 sets an SRB and a TFCS (Transport Format Combination Set), and outputs to control information creation section 106 the preconfiguration type and index outputted from preconfiguration use determining section 103 in addition to the setting information as additional information.

Control information creation section 106 includes the channel setting information outputted from channel setting determining section 102 in a message such as an RRC connection setup message, radio bearer setup message and radio bearer reconfiguration message when it is reported from multi-call additional information determining section 105 that the preconfiguration will not be used, and includes information of the setting information of the SRB and the TFCS and the preconfiguration type and index in a message such as an RRC connection setup message, radio bearer setup message and radio bearer reconfiguration message when these information is outputted from multi-call additional information determining section 105, and outputs these information to control information transmitting section 107 as control information.

Control information transmitting section 107 applies predetermined transmission processing to the control information outputted from control information creation section 106 and transmits the control information subjected to transmission processing to the UE.

Next, the operation of Node B 100 having the above-described configuration will be explained. Upon receiving, for example, a speech communication request from a higher layer (not shown), channel establishment determining section 101 determines a channel needed for speech communication. Furthermore, upon receiving a request for speech communication and packet communication, channel establishment determining section 101 determines establishment of these two channels. Upon receiving a packet communication request, channel establishment determining section 101 also receives a report on rate information from the higher layer and selects a channel according to the rate information.

Channel setting determining section 102 determines a detailed setting of the channel determined by channel establishment determining section 101.

Preconfiguration use determining section 103 stores preconfiguration information, and, when the channel setting information outputted from channel setting determining section 102 designates a traffic channel (12.2 kbps) for AMR speech communication and a signaling channel (3.4 kbps) for a control signal, for example, decides whether or not the channel setting information is included in the stored preconfiguration information.

When a plurality of services are requested simultaneously in channel establishment determining section 101, the above-described operation is repeated a plurality of times in preconfiguration use determining section 103. For example, when 384 kbps downlink packet communication is requested in addition to the above-described AMR speech communication, it is necessary to set downlink 384 kbps PS (Packet Switch), uplink 64 kbps PS and 3.4 kbps signaling channel. Here, although the signaling channel is set in both the AMR speech communication and packet communication, the signaling channel may be set in at least one of them.

When preconfiguration use determining section 103 determines to use the preconfiguration, multi-call additional information determining section 105 determines whether or not the preconfiguration determined to be used can be specified by only one index. Multi-call additional information determining section 105 determines whether or not the preconfiguration needs to be set using a plurality of indexes based on this determination result and the channel type set in the UE, which is acquired from UE channel setting state management section 104. Upon determining to set the preconfiguration without using the plurality of indexes, multi-call additional information determining section 105 transfers to control information creation section 106 the preconfiguration type and index outputted from preconfiguration use determining section 103.

On the other hand, upon determining to set the preconfiguration using a plurality of indexes, multi-call additional information determining section 105 sets an SRB and a TFCS. Details of this will be explained below. Although the SRB is included in all indexes, a setting included in any one of indexes can be used to realize multi-call, and so multi-call additional information determining section 105 determines which index the SRB to be used is included in.

There can be a plurality of methods for determining this, and one method may select the fastest index from the plurality of indexes. When, for example, one index specifies a 3.4 kbps signaling channel and another index specifies a 13.6 kbps signaling channel, the faster 13.6 kbps signaling channel is selected. The selected index is stored in multi-call additional information determining section 105 and information specifying which index is used as an SRB is created.

By the way, there can also be a case where the UE has already used a channel and setting an additional channel results in multi-call. In this case, by adding a flag which shows the use of the currently-used SRB as is instead of a report using an index, it is possible to command the use of previous SRB.

Next, a TFCS will be explained. As a feature of a TFCS such as a TFCS for AMR speech, TFCS for packet and TFCS for multi-call, all these TFCSs are different from each other. A setting pattern of the TFC (Transport Format Combination) is determined from individual TFCSs. A TFCS for AMR speech is determined from, for example, a TFCS shown in Table 1.

[Table 1]

| TFCS size | 6 |
|---|---|
| TFCS | (RAB subflow#1, RAB subflow#2, RAB subflow#3,DCCH)= (TF0, TF0, TF0, TF0), (TF1, TF0, TF0, TF0), (TF2, TF1, TF1, TF0), (TF0, TF0, TF0, TF1), (TF1, TF0, TF0, TF1), (TF2, TF1, TF1, TF1) |

Furthermore, a TFCS for packet is determined from, for example, a TFCS shown in Table 2.

[Table 2]

| TFCS size | 12 |
|---|---|
| TFCS | (384 kbps RAB, DCCH)= (TF0, TF0), (TF1, TF0), (TF2, TF0), (TF3, TF0), (TF4, TF0), (TF5, TF0) (TF0, TF1), (TF1, TF1), (TF2, TF1), (TF3, TF1), (TF4, TF1), (TF5, TF1) |

Furthermore, a TFCS for multi-call is determined from, for example, a TFCS shown in Table 3.

[Table 3]

| TFCS size | 36 |
|---|---|
| TFCS | (RAB subflow#1, RAB subflow#2, RAB subflow#3, 384 kbps RAB, DCCH)= (TF0, TF0, TF0, TF0, TF0), (TF1, TF0, TF0, TF0, TF0), (TF2, TF1, TF1, TF0, TF0), (TF0, TF0, TF0, TF1, TF0), (TF1, TF0, TF0, TF1, TF0), (TF2, TF1, TF1, TF1, TF0), (TF0, TF0, TF0, TF2, TF0), (TF1, TF0, TF0, TF2, TF0), (TF2, TF1, TF1, TF2, TF0), (TF0, TF0, TF0, TF3, TF0), (TF1, TF0, TF0, TF3, TF0), (TF2, TF1, TF1, TF3, TF0), (TF0, TF0, TF0, TF4, TF0), (TF1, TF0, TF0, TF4, TF0 (TF2, TF1, TF1, TF4, TF0) (TF0, TF0, TF0, TF5, TF0), (TF1, TF0, TF0, TF5, TF0), (TF2, TF1, TF1, TF5, TF0), (TF0, TF0, TF0, TF0, TF1), (TF1, TF0, TF0, TF0, TF1), (TF2, TF1, TF1, TF0, TF1), (TF0, TF0, TF0, TF1, TF1), (TF1, TF0, TF0, TF1, TF1), (TF2, TF1, TF1, TF1, TF1), (TF0, TF0, TF0, TF2, TF1), (TF1, TF0, TF0, TF2, TF1), (TF2, TF1, TF1, TF2, TF1), (TF0, TF0, TF0, TF3, TF1), (TF1, TF0, TF0, TF3, TF1), (TF2, TF1, TF1, TF3, TF1), (TF0, TF0, TF0, TF4, TF1), (TF1, TF0, TF0, TF4, TF1), (TF2, TF1, TF1, TF4, TF1) (TF0, TF0, TF0, TF5, TF1), (TF1, TF0, TF0, TF5, TF1), (TF2, TF1, TF1, TF5, TF1) |

In this way, a TFCS to be used varies depending on the use for AMR speech, packet and multi-call, and so a TFCS for AMR speech or a TFCS for packet managed by the preconfiguration information cannot be used for the multi-call case. Therefore, the channel setting information determined by channel setting determining section 102 and preconfiguration information stored in multi-call additional information determining section 105 do not match in the multi-call case, and so a TFCS, TFCS size and TFC to be set are newly determined to use the preconfiguration.

A case will be explained below where multi-call is applied, and consequently, a TFCS in Table 3 is used, the TFCS size is 36 as shown in Table 3 and the number of bits needed to specify this information is 6 bits. Furthermore, a TFC to be set is determined using Table 3, and this information is referred to as "CTFC." In Table 3, CTFC=0 is reported when (TF0, TF0, TF0, TF0, TF0) is selected, and CTFC=1 is reported when (TF1, TF0, TF0, TF0, TF0) is selected, and, CTFC=35 is reported when (TF1, TF0, TF0, TF0, TF0) is sequentially selected. The information determined in this way is created as the information to overwrite the configuration corresponding to the index.

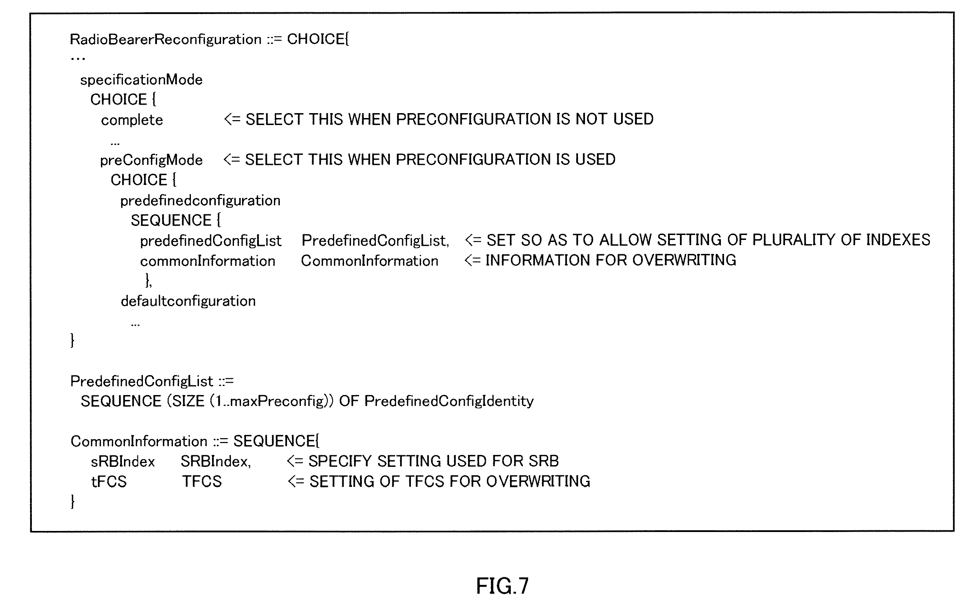

When receiving a report that the preconfiguration will not be used from multi-call additional information determining section 105, control information creation section 106 includes the channel setting information outputted from channel setting determining section 102, and, when the setting information of an SRB and a TFCS and the preconfiguration type and index are outputted from multi-call additional information determining section 105, control information creation section 106 includes such information in a message or the like and outputs it to control information transmitting section 107 as the control information. FIG.7 shows a message format in this case. As shown in FIG.7, a predefined configuration list capable of setting a plurality of indexes is provided for a multi-call use, and the multi-call setting is stored in this area. Furthermore, an index (SRB Index) used to set an SRB and a TFCS appropriate for a multi-call setting are stored in common information.

In this way, when multi-call is set in speech communication or packet communication and the preconfiguration is applied to multi-call, one SRB is selected from a plurality of SRBs specified by a plurality of indexes, one TFC is selected from a multi-call TFCS, and these selected information is used as overwrite information to overwrite the configuration corresponding to the index, so that it is possible to suppress an increase of the number of indexes even if the preconfiguration is applied to multi-call.

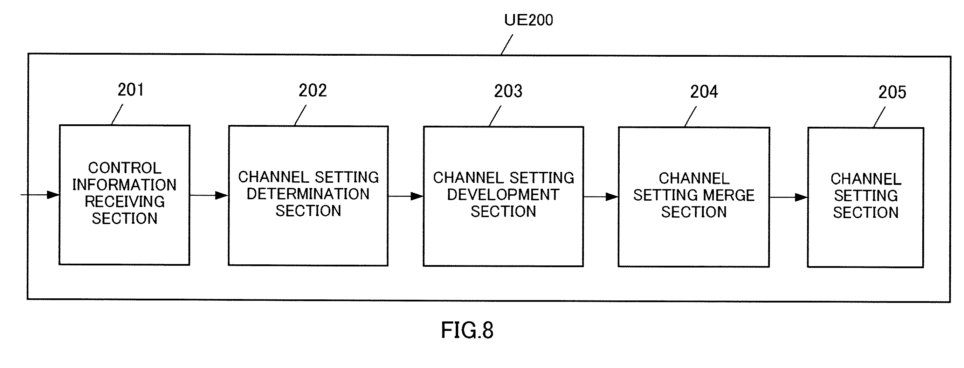

FIG. 8 is a block diagram showing the configuration of UE 200 according to Embodiment 1 of the present invention. In this figure, control information receiving section 201 receives control information transmitted from Node B 100 shown in FIG.6, applies predetermined reception processing to the received control information and outputs the control information subjected to reception processing to channel setting determination section 202.

Channel setting determination section 202 determines the control information out putted from control information receiving section 201 and transfers the determined control information to channel setting development section 203.

Channel setting development section 203 stores a configuration pattern, reads the configuration corresponding to an index transferred from channel setting determination section 202 and outputs the read configuration to channel setting merge section 204. By this means, the content reported by the index shown in FIG.7 is developed to the configuration. Furthermore, channel setting development section 203 outputs to channel setting merge section 204 common information which is transferred from channel setting determination section 202 and which is shown in FIG.7. Furthermore, when channel setting information is outputted from channel setting determination section 202, the channel setting information is outputted as is to channel setting merge section 204.

For the configuration outputted from channel setting development section 203, channel setting merge section 204 overwrites a TFCS using the content of common information further outputted from channel setting development section 203 and selects whether to use the content included in any one of indexes or the previously set content as is for the SRB. By this means, channel setting development section 203 merges the configuration and outputs the merged configuration to channel setting section 205. In addition, when the channel setting information is outputted from channel setting development section 203, the channel setting information is transferred to channel setting section 205.

Channel setting section 205 makes a channel setting based on the configuration or channel setting information outputted from channel setting merge section 204.

As described above, according to Embodiment 1, when a preconfiguration is applied to multi-call, one SRB is selected from a plurality of SRBs specified by a plurality of indexes, a TFC is selected from a TFCS for multi-call, the configuration corresponding to the index is overwritten with the selected information, so that it is possible to suppress an increase of the number of indexes even if the preconfiguration is applied to multi-call.

Although a case has been described with the present embodiment where Node B is used as an example, the present invention is not limited thereto, and it is also applicable to an apparatus higher than Node B, for example, a core network node such as an RNC (Radio Network Controller), SGSN and GGSN, and these are generically referred to as a "network apparatus."

(Embodiment 2)

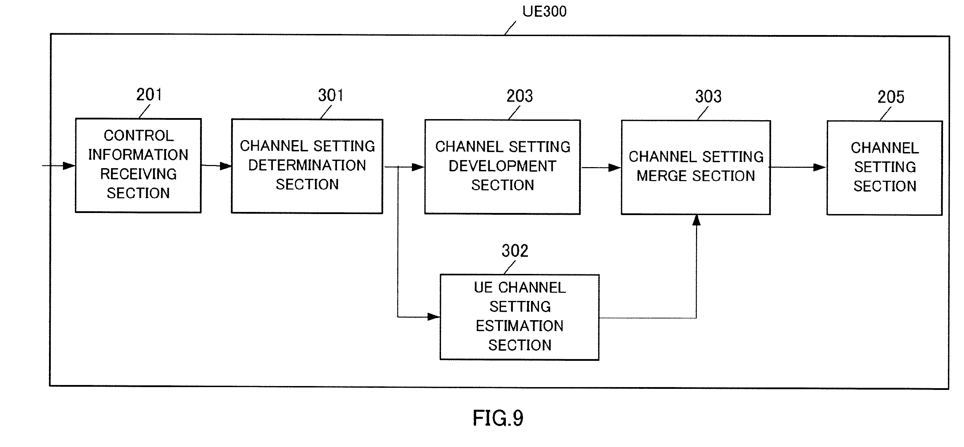

FIG.9 is a block diagram showing the configuration of UE 300 according to Embodiment 2 of the present invention. Here, in FIG. 9, the same components as in FIG. 8 are assigned the same reference numerals and detailed explanations thereof will be omitted. FIG.9 differs from FIG.8 in that UE channel setting estimation section 302 is added, channel setting determination section 202 is replaced by channel setting determination section 301 and channel setting merge section 204 is replaced by channel setting merge section 303.

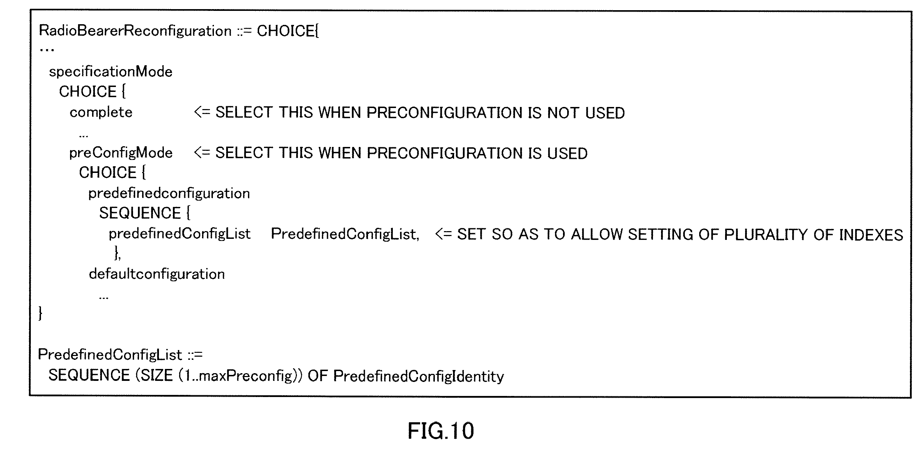

In FIG.9, channel setting determination section 301 determines control information outputted from control information receiving section 201 and transfers the determined control information to channel setting development section 203. Furthermore, when a plurality of indexes are reported as a setting of predefined configuration, channel setting determination section 301 outputs the reported plurality of indexes to UE channel setting estimation section 302 together with the determined control information. As shown in FIG.10, a predefined configuration list is set such that a plurality of indexes are stored in the control information determined here.

UE channel setting estimation section 302 estimates UL/DL common transport channel information (see FIG. 4) such that this UL/DL common transport channel information is suitable for multi-call, based on the signal outputted from channel setting determination section 301, and outputs the estimation result to channel setting merge section 303. Details of UE channel setting estimation section 302 will be described later.

By overwriting the configuration outputted from channel setting development section 203 with the estimation result of the UL/DL common transport channel information outputted from UE channel setting estimation section 302, channel setting merge section 303 merges the configuration and outputs the merged configuration to channel setting section 205.

Next, details of above-described UE channel setting estimation section 302 will be explained. UE channel setting estimation section 302 sets an SRB and a TFCS. Details will be explained below. Although the SRB is included in all indexes reported from channel setting determination section 301, a setting included in any one of indexes can be used to realize multi-call, and so the fastest index is selected from a plurality of indexes. When, for example, one of a 3 . 4 kbps signaling channel and 13.6 kbps signaling channel is selected, the faster 13.6 kbps signaling channel is selected. The selected index is stored in UE channel setting estimation section 302 and information specifying the index to be used as the SRB is created.

Next, as for a TFCS, a TFC setting pattern is determined from a TFCS for AMR speech, packet and multi-call. A TFCS for AMR speech is determined from a TFCS shown in Table 1, a TFCS for packet is determined from a TFCS shown in Table 2, and a TFCS for multi-call is determined from a TFCS shown in Table 3.

Here, when it is assumed that multi-call performs packet communication based on AMR speech communication, an explanation will be given about how UE channel setting estimation section 302 corrects the TFCS size. There are six patterns for the TFCS for AMR speech as shown in Table 1, and there are six patterns for the TFCS for a packet if the part overlapping with the SRB for AMR speech is deleted. As a result, $6\times6=36$ patterns are necessary and the number of bits needed to specify this information is 6 bits. This 6 bits is defined as a new TFCS size.

Next, which TFC should be set will be determined. Here, a case is assumed where CTFC is 1 and 2 for AMR speech and CTFC is 1 and 7 for packet. In this case, a TFC for AMR speech is (TF1, TF0, TF0, TF0) and (TF2, TF1, TF1, TF0), a TFC for packet is (TF1, TF0) and (TF1, TF1), and so the TFC for multi-call is set by multiplying these TFCs.

That is, the TFC for multi-call is estimated in the following equations.

$$(TF1, TF0, TF0, TF0) * (TF1, TF0) = (TF1, TF0, TF0, TF1, TF0)$$

$$(TF2, TF1, TF1, TF0) * (TF1, TF0) = (TF2, TF1, TF1, TF1, TF0)$$

$$(TF1, TF0, TF0, TF0) * (TF1, TF1) = (TF1, TF0, TF0, TF1, TF1)$$

$$(TF2, TF1, TF1, TF0) * (TF1, TF1) = (TF2, TF1, TF1, TF1, TF1)$$

TFCs become TFC=4, 5, 22 and 23 from Table 3, respectively.

In this way, according to Embodiment 2, when a preconfiguration is applied to multi-call, a UE selects one SRB from a plurality of SRBs specified by a plurality of indexes reported from Node B and selects a TFC from TFCS for multi-call, overwrites the configuration corresponding to the index with these selected information, so that it is possible to suppress an increase of the number of indexes even if the preconfiguration is applied to multi-call and reconstruct channel setting information for multi-call in the UE.

Although a case has been described with the present embodiment where a message including a plurality of indexes is received, a multi-call case where a channel has already been provided and a message including only one index has been received, can also be handled by a similar operation.

Although a case has been described with the above embodiments as an example where the present invention is implemented with hardware, the present invention can be implemented with software.

Furthermore, each function block employed in the description of each of the aforementioned embodiments may typically be implemented as an LSI constituted by an integrated circuit. These may be individual chips or partially or totally contained on a single chip. "LSI" is adopted here but this may also be referred to as "IC, " "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-246089, filed on August 26, 2005, entire content of which is expressly incorporated by reference herein.

Industrial Applicability

The radio communication terminal apparatus, network apparatus, radio communication system and call connection method according to the present invention can suppress an increase of the number of indexes, apply a preconfiguration to multi-call and are applicable to a 3GPP radio communication scheme or the like.

**Claims**

1. A network apparatus comprising:

   an additional information determining section that determines, when commands are given using a plurality of indexes specifying configuration information which is a combination pattern of channel setting information, additional information other than the configuration information;
   a control information creation section that creates control information including the plurality of indexes and determined additional information; and
   a transmitting section that transmits the created control information.

2. The network apparatus according to claim 1, wherein the additional information determining section determines to select a setting of a signaling radio bearer specified by an index from a plurality of signaling radio bearers specified by the plurality of indexes and determines a setting of a transport format combination set.

3. A radio communication terminal apparatus comprising:

   a receiving section that receives a plurality of indexes specifying configuration information which is a combination pattern of channel setting information and control information including additional information other than the configuration information;
   a merge section that merges the configuration information specified by the received index with the additional information; and
   a channel setting section that sets a channel using the merged configuration information.

4. A radio communication terminal apparatus comprising:

   a receiving section that receives control information including a plurality of indexes specifying configuration information which is a combination pattern of channel setting information;
   an estimation section that estimates additional information other than the configuration information specified by the received index;
   a merge section that merges the configuration information specified by the received index with the additional information; and
   a channel setting section that sets a channel using the merged configuration information.

5. A radio communication system comprising a network apparatus and a radio communication terminal apparatus, the network apparatus comprising:

   an additional information determining section that determines, when commands are given using a plurality of indexes specifying configuration information which is a combination pattern of channel setting information, additional information other than the configuration information;
   a control information creation section that creates control information including the plurality of indexes and determined additional information; and
   a transmitting section that transmits the created control information, and the radio communication terminal apparatus comprising:

      a receiving section that receives the control information transmitted from the network apparatus;
      a merge section that merges the configuration information, specified by the index included in the received control information, with the additional information; and
      a channel setting section that sets a channel using the merged configuration information.

6. A call connection method comprising:

   an additional information determining step of determining, when commands are given using a plurality of indexes specifying configuration information which is a combination pattern of channel setting information, additional information other than the configuration information;
   a transmitting step of transmitting control information including the plurality of indexes and determined additional information;
   a merging step of merging the configuration information, specified by the index included in control information transmitted from the network apparatus, with the additional information; and
a channel setting step of setting a channel using the merged configuration information.

RRC CONNECTION ESTABLISHMENT ST11

RRC CONNECTION REQUEST

RRC CONNECTION SETUP

ST12 ST13

RRC CONNECTION SETUP COMPLETE

NAS CONNECTION ESTABLISHMENT ST14

INITIAL DIRECT TRANSFER (CM SERVICE REQUEST)

AUTHENTICATION& SECURITY PROCESS ST15

DOWNLINK DIRECT TRANSFER (AUTHENTICATION REQUEST)

UPLINK DIRECT TRANSFER (AUTHENTICATION RESPONSE)

ST17

SECURITY MODE COMMAND ST16

ST18

SECURITY MODE COMPLETE

RAB SETUP & PDP CONTEXT SETUP

UPLINK DIRECT TRANSFER (ACTIVATE PDP CONTEXT REQUEST)

ST20

RADIO BEARER SETUP ST19

ST21

RADIO BEARER SETUP COMPLETE

DOWNLINK DIRECT TRANSFER (ACTIVATE PDP CONTEXT ACCEPT)

ST22

PRIOR ART

FIG.1

| TERMINAL | | NETWORK |

RRC CONNECTION ESTABLISHMENT  ST11
RRC CONNECTION REQUEST

RRC CONNECTION SETUP  ST12

RRC CONNECTION SETUP COMPLETE  ST13

NAS CONNECTION ESTABLISHMENT  ST14
INITIAL DIRECT TRANSFER (CM SERVICE REQUEST)

AUTHENTICATION & SECURITY PROCESS  ST15
DOWNLINK DIRECT TRANSFER (AUTHENTICATION REQUEST)

UPLINK DIRECT TRANSFER (AUTHENTICATION RESPONSE)
ST17
SECURITY MODE COMMAND  ST16
ST18
SECURITY MODE COMPLETE

RAB SETUP & PDP CONTEXT SETUP
UPLINK DIRECT TRANSFER (ACTIVATE PDP CONTEXT REQUEST)
ST20
RADIO BEARER SETUP  ST19
ST21
RADIO BEARER SETUP COMPLETE
ST22
DOWNLINK DIRECT TRANSFER (ACTIVATE PDP CONTEXT ACCEPT)

NAS CONNECTION ESTABLISHMENT
ST31
UPLINK DIRECT TRANSFER (CM SERVICE REQUEST)

RAB SETUP & PDP CONTEXT SETUP
ST32
UPLINK DIRECT TRANSFER (ACTIVATE PDP CONTEXT REQUEST)
ST33
RADIO BEARER SETUP
ST34
RADIO BEARER SETUP COMPLETE
ST35
DOWNLINK DIRECT TRANSFER (ACTIVATE PDP CONTEXT ACCEPT)

PRIOR ART

FIG.2

SET USING RRC CONNECTION SETUP
(WHEN RRC CONNECTION IS ESTABLISHED)

SET USING RADIO BEARER SETUP

C-Plane NAS
(MM, SM. SMS)

PACKET CALL     SPEECH CALL

RRC

PDCP

SRB1     SRB2     SRB3     RAB 20     RAB5

RLC
UM

RLC
AM

RLC
AM

RLC
AM

RLC
TM

MAC

TrCH a     TrCH b     TrCH c     TrCH x     TrCH y

PHYSICAL
CHANNEL

PRIOR ART

FIG.3

| RRC Transaction identifier | | |
|---|---|---|
| Integrity related information | | |
| Ciphering related information | | |
| Activation time | | |
| Identifier of UE | | |
| RRC State indicator | | |
| DRX cycle length | | |
| Core network information | | |
| SRB1 | SRB2 | SRB3 |
| RLC info | RLC info | RLC info |
| Mapping Info | Mapping Info | Mapping Info |
| UL/DL Common Transport channel information | | |
| TrCH info | TrCH info | TrCH info |
| Physical channel information | | |

IE USING
PRECONFIGURATION

RB SETTING IE

TrCH SETTING IE

PRIOR ART

FIG.4

14

| RRC Transaction identifier | |
|---|---|
| Integrity related information | |
| Ciphering related information | |
| Activation time | |
| Identifier of UE | |
| RRC State indicator | |
| DRX cycle length | |
| Core network information | |
| RAB5 | RAB20 |
| RLC info | RLC info |
| Mapping Info | Mapping Info |
| PDCP info | PDCP info |
| UL／ DL Common Transport channel information | |
| TrCH info | TrCH info |
| Physical channel information | |

IE USING PRECONFIGURATION

RB SETTING IE

TrCH SETTING IE

PRIOR ART

FIG.5

| 101 | 102 | | 106 | 107 |
|---|---|---|---|---|
| CHANNEL ESTABLISHMENT DETERMINING SECTION | CHANNEL SETTING DETERMINING SECTION | | CONTROL INFORMATION CREATION SECTION | CONTROL INFORMATION TRANSMITTING SECTION |

103
PRECONFIGURATION USE DETERMINING SECTION

105
MULTI-CALL ADDITIONAL INFORMATION DETERMINING SECTION

104
UE CHANNEL SETTING STATE MANAGEMENT SECTION

FIG.6

EP 1 919 238 A1

```
RadioBearerReconfiguration ::= CHOICE{
...

  specificationMode
    CHOICE {
      complete          <= SELECT THIS WHEN PRECONFIGURATION IS NOT USED

      ...
      preConfigMode     <= SELECT THIS WHEN PRECONFIGURATION IS USED
        CHOICE {
          predefinedconfiguration
            SEQUENCE {
              predefinedConfigList    PredefinedConfigList,   <= SET SO AS TO ALLOW SETTING OF PLURALITY OF INDEXES
              commonInformation       CommonInformation       <= INFORMATION FOR OVERWRITING
              },
          defaultconfiguration

            ...

}

PredefinedConfigList ::=
  SEQUENCE (SIZE (1..maxPreconfig)) OF PredefinedConfigIdentity

CommonInformation ::= SEQUENCE{
    sRBIndex    SRBIndex,    <= SPECIFY SETTING USED FOR SRB
    tFCS        TFCS         <= SETTING OF TFCS FOR OVERWRITING
}
```

FIG.7

EP 1 919 238 A1

UE200

FIG.8

UE300

| 201 | 301 | 203 | 303 | 205 |
|---|---|---|---|---|
| CONTROL INFORMATION RECEIVING SECTION | CHANNEL SETTING DETERMINATION SECTION | CHANNEL SETTING DEVELOPMENT SECTION | CHANNEL SETTING MERGE SECTION | CHANNEL SETTING SECTION |

302

UE CHANNEL SETTING ESTIMATION SECTION

FIG.9

EP 1 919 238 A1

```
RadioBearerReconfiguration ::= CHOICE{
...
  specificationMode
   CHOICE {
     complete          <= SELECT THIS WHEN PRECONFIGURATION IS NOT USED

       ...
     preConfigMode     <= SELECT THIS WHEN PRECONFIGURATION IS USED
       CHOICE {
         predefinedconfiguration
           SEQUENCE {
             predefinedConfigList    PredefinedConfigList,   <= SET SO AS TO ALLOW SETTING OF PLURALITY OF INDEXES
             },
         defaultconfiguration

           ...
}

PredefinedConfigList ::=
  SEQUENCE (SIZE (1..maxPreconfig)) OF PredefinedConfigIdentity
```

FIG.10

## INTERNATIONAL SEARCH REPORT

| International application No. |
|---|
| PCT/JP2006/316760 |

| A. CLASSIFICATION OF SUBJECT MATTER |
|---|
| *H04Q7/38(2006.01)i, H04Q7/36(2006.01)i* |

According to International Patent Classification (IPC) or to both national classification and IPC

| B. FIELDS SEARCHED |
|---|

Minimum documentation searched (classification system followed by classification symbols)
H04Q7/38, H04Q7/36

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2002-142043 A (Toshiba Corp.), 17 May, 2002 (17.05.02), Full text; all drawings (Family: none) | 1-6 |
| A | JP 2004-534412 A (Nokia Corp.), 11 November, 2004 (11.11.04), Full text; all drawings & EP 1334637 A1 | 1-6 |
| A | JP 2004-166233 A (Asustek Computer Inc.), 10 June, 2004 (10.06.04), Full text; all drawings & EP 1408658 A2 | 1-6 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 October, 2006 (11.10.06) | 24 October, 2006 (24.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005246089 A